# EUROPEAN PATENT APPLICATION

(11) **EP 1 072 470 A2**
(43) Date of publication of application: **31.01.2001**
(21) Application number: 00100136.1
(22) Date of filing: 07.01.2000
(51) Int. Cl.: B60R 9/045

(54) **Universal clamp for fixing a cross-member to the longitudinal rails on a vehicle roof**

(30) Priority: 29.07.1999 IT MI991686
(71) Applicant: FABBRI S.r.l., I-25040 Bornato Cazzago S. Martino (Brescia) (IT)
(72) Inventor: Fabbri Corsarini, Luciano, 25017 Sedena Di Lonato (Brescia) (IT)
(74) Representative: Modiano, Guido, Dr.-Ing.

(57) **Abstract**

A universal clamp for applying carryall bars (11) to longitudinal rails (4) provided on motor vehicle roofs, comprising a resting body (2) which can be coupled to a longitudinal rail (4) and forms a seat (10) for the insertion of a carryall bar (11). The main feature of the clamp of the invention consists in that it comprises locking means constituted by a flexible element (20) which can be fastened in order to simultaneously lock the carryall bar (11) in the seat (10) and the resting body on the longitudinal rail (4).

## Description

The present invention relates to a universal clamp for applying carryall bars to the longitudinal rails provided on the roofs of cars.

Currently motor vehicles are commercially available having on their roof longitudinal profiles or bars which have different cross-sections and dimensions and are also commonly known as rails.

Clamps are already commercially available for connecting carryall bars, which are arranged transversely, to the longitudinal rails; said clamps are usually mechanically complicated and, particularly, they are unable to easily adapt to the different profiles of the longitudinal rails that are used.

In order to solve this problem, so-called universal clamps have already been manufactured which are structured so as to couple to the longitudinal rails and form a seat in which the carryall bar is inserted; said carryall bar must then be locked in said seat through adapted means.

Although this solution improves the previous situation, it entails a long time for connecting the carryall bars.

The aim of the present invention is to eliminate the above-noted drawbacks, by providing a universal clamp for applying carryall bars to the longitudinal rails provided on motor vehicle roofs which can adapt to any configuration of the longitudinal rails so as to always obtain a very rapid and precise fastening of the carryall bar as well.

Within the scope of this aim, a particular object of the invention is to provide a universal clamp in which application can be achieved by a single operation which can be performed without particular difficulties.

Another object of the present invention is to provide a universal clamp for applying carryall bars to the longitudinal rails provided on motor vehicle roofs which can be easily obtained starting from commonly commercially available elements and materials and is furthermore competitive from an economical point of view.

This aim, these objects and others which will become apparent hereinafter are achieved by a universal clamp for applying carryall bars to the longitudinal rails provided on motor vehicle roofs, comprising a resting body which can be coupled to a longitudinal rail and forms a seat for the insertion of a carryall bar, characterized in that it comprises locking means constituted by a flexible element which can be fastened in order to simultaneously lock said carryall bar in said seat and said resting body on said longitudinal rail.

Further characteristics and advantages of the present invention will become apparent from the following detailed description of a preferred but not exclusive embodiment of a universal clamp for applying carryall bars to the longitudinal rails provided on motor vehicle roofs, illustrated only by way of non-limitative example in the accompanying drawings, wherein:

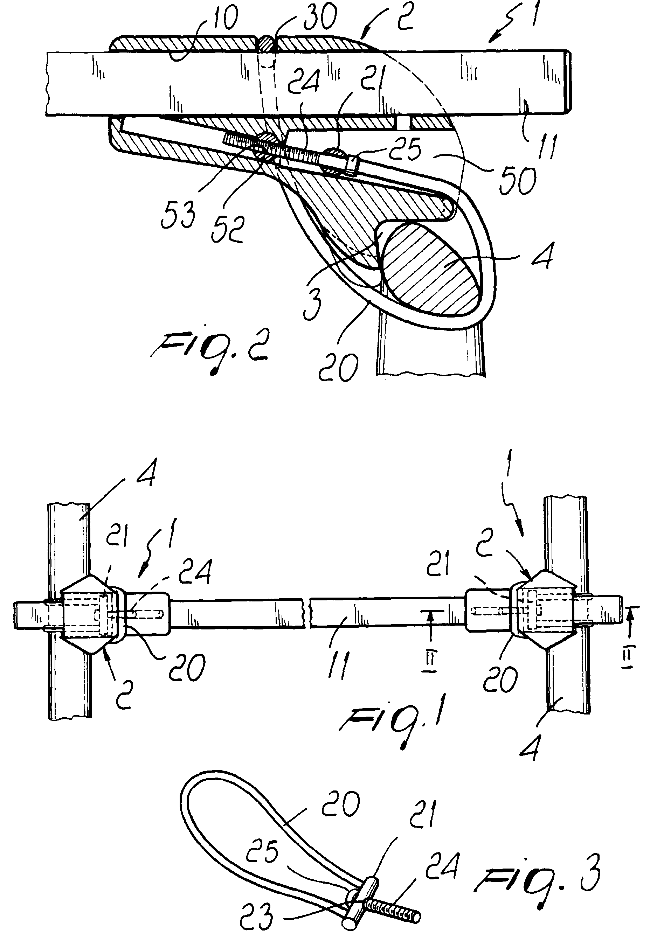

Figure 1 is a schematic plan view of a carryall bar applied to the longitudinal rails of a motor vehicle roof, by means of the universal clamp, according to the invention;
Figure 2 is a sectional view, taken along the line II-II of Figure 2;
Figure 3 is a schematic perspective view of the locking means;

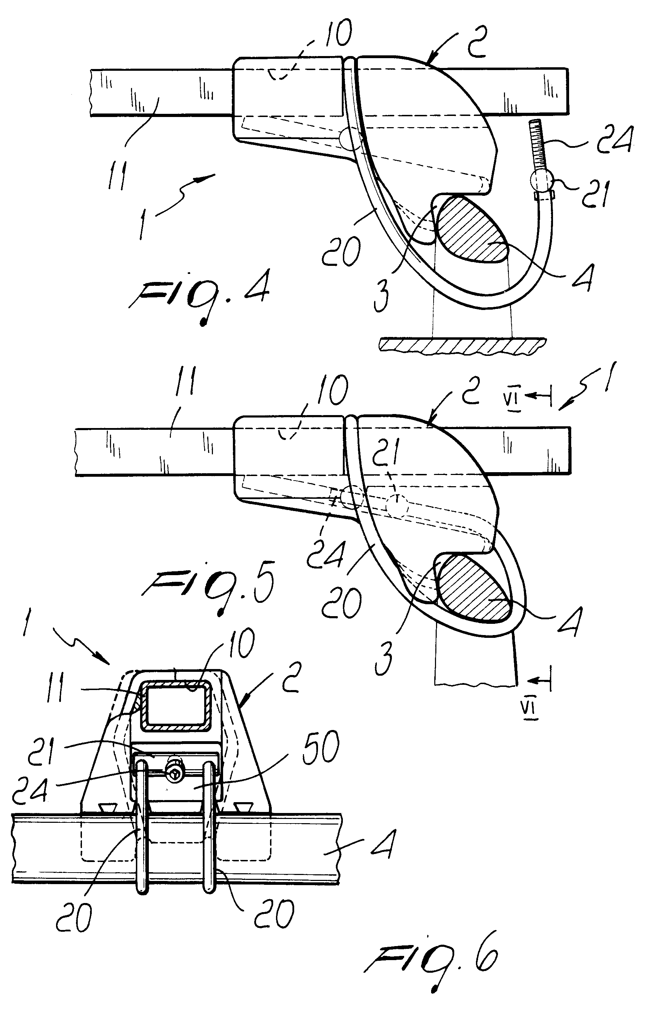

Figure 4 is a front view of the clamp during the application of the locking means;
Figure 5 is a front view of the clamp in the locking position;
Figure 6 is a sectional view, taken along the line VI-VI of Figure 5.

With reference to the above figures, the universal clamp for applying carryall bars to longitudinal rails provided on motor vehicle roofs, according to the invention, generally designated by the reference numeral 1, comprises a resting body 2 which forms, in its lower end part, an L-shaped recess 3 which is shaped so as to couple to a longitudinal rail, generally designated by the reference numeral 4, of a motor vehicle roof.

The resting body 2 has, in its upper part, a seat 10 of the through type inside which a carryall bar 11 can be detachably accommodated.

The main feature of the clamp of the invention consists in that it is provided with locking means which are constituted by a flexible element, provided by means of a cable 20, whose ends are connected to a rod 21 centrally provided with a through hole 23 for the passage of a locking screw 24 whose head 25 is adapted to arrange itself in abutment against the rod 21.

The locking means are arranged so as to wrap around the resting body 2 and in particular there is a slot 30 which is arranged transversely to the extension of the seat 10, so that the cable 20 can engage the carryall bar 11, locking it in position.

The cable 20 further surrounds the longitudinal rail 4 and the rod 21 is inserted in a cavity 50 which is formed by the resting body 2 and ends at the bottom in a region for accommodating a pawl 52 which defines a threaded seat into which the screw 24 can be screwed.

By screwing the screw 24 into the threaded seat 53, the cable 20 is pulled and tightened so as to lock the carryall bar 11 inside the seat 10 and simultaneously lock the resting body 2 against the longitudinal rail 4.

Thanks to the above arrangement, with a single actuation, it is possible to lock both the carryall bar 11 with respect to the resting body and the resting body with respect to the longitudinal rail 4.

From the above description it is thus clear that the invention achieves the intended aim and objects, and in particular it is stressed that a universal clamp for applying carryall bars has been provided which is extremely simple from a structural point of view and very handy from a functional point of view, since it allows to lock the clamp with a single operation.

The invention thus conceived is susceptible of numerous modifications and variations, all of which are within the scope of the inventive concept.

All the details may also be replaced with other technically equivalent elements.

In practice, the materials employed, as well as the dimensions and the contingent shapes, may be any according to requirements.

The disclosures in Italian Patent Application No. MI99A001686 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A universal clamp for applying carryall bars to longitudinal rails provided on motor vehicle roofs, comprising a resting body which can be coupled to a longitudinal rail and forms a seat for the insertion of a carryall bar, characterized in that it comprises locking means constituted by a flexible element which can be fastened in order to simultaneously lock said carryall bar in said seat and said resting body on said longitudinal rail.

2. The universal clamp according to claim 1, characterized in that said locking means comprise a cable whose ends are connected to a rod which forms a through hole for the engagement of a screw whose head is meant to arrange itself in abutment against said rod.

3. The universal clamp according to claim 2, characterized in that it comprises a slot for accommodating said cable, said slot being provided on said resting body transversely to said seat for the engagement of said cable with said longitudinal rail.

4. The universal clamp according to claim 2, characterized in that it comprises a cavity in said resting body, said cavity being open at one end for the insertion of said rod, a pawl being arranged on the bottom of said cavity and having a threaded seat for engagement with said screw.

5. The universal clamp according to claim 2, characterized in that said cable wraps transversely around said seat and run at least partially around said longitudinal rail.
